# EUROPÄISCHE PATENTSCHRIFT

(11) **EP 0 832 179 B1**
(45) Veröffentlichungstag und Bekanntmachung des Hinweises auf die Patenterteilung: **01.03.2000**
(21) Anmeldenummer: 96916064.7
(22) Anmeldetag: 14.05.1996
(51) Int. Cl.: C12H 1/10

(54) **VERFAHREN ZUR BESEITIGUNG VON GERUCHS- UND/ODER GESCHMACKSFEHLERN IN UNVERGORENEN ODER VERGORENEN FRUCHTSÄFTEN, INSBESONDERE WEIN, FRUCHTWEIN ODER FRUCHTDESTILLATEN**
PROCESS FOR ELIMINATING SMELL DEFECTS AND/OR OFF-FLAVOURS IN FERMENTED OR NON-FERMENTED FRUIT JUICES, IN PARTICULAR WINE, FRUIT WINE OR FRUIT DISTILLATE PRODUCTS
PROCEDE D'ELIMINATION DE DEFAUTS D'ODEUR ET/OU DU MAUVAIS GOUT DE JUS DE FRUIT FERMENTES OU NON, NOTAMMENT DU VIN, DU VIN DE FRUITS OU DES PRODUITS DE DISTILLATION DE FRUITS

(30) Priorität: 16.05.1995 DE 19517845
(43) Veröffentlichungstag der Anmeldung: 01.04.1998
(73) Patentinhaber: Scholl, Willy, 76327 Pfinztal (DE); Eschnauer, Heinz, 63579 Freigericht-Somborn (DE)
(72) Erfinder: Scholl, Willy, 76327 Pfinztal (DE); Eschnauer, Heinz, 63579 Freigericht-Somborn (DE)
(74) Vertreter: Dreiss, Fuhlendorf, Steimle & Becker, Patentanwälte
(86) Internationale Anmeldenummer: EP9602056
(87) Internationale Veröffentlichungsnummer: WO9636690

(56) Entgegenhaltungen:
- CH-A- 648 993
- DATABASE WPI Section Ch, Week 8143 Derwent Publications Ltd., London, GB; Class D16, AN 81-79127d XP002014098 & SU,A,800 190 (MOSCOW NAT. ECONOMY INST.) , 19.April 1979

## Beschreibung

Die Erfindung betrifft ein Verfahren zur Beseitigung von Geruchs- und/oder Geschmacksfehlern in unvergorenen oder vergorenen Fruchtsäften aus Obst oder Trauben, insbesondere Wein, Fruchtwein oder Fruchtdestillaten, deren Ursache in der Bildung von Schwefelverbindungen, insbesondere Schwefelwasserstoff, liegt.

Bei der reduktiven Vergärung von Fruchtsäften entsteht Schwefelwasserstoff und andere Schwefelverbindungen. Die hierdurch bedingte, als "Böckser" bezeichnete Geruchs- und Geschmacksbeeinträchtigung bei Gärungsprodukten ist unangenehm und hartnäckig.

Man kennt zur Beseitigung des Böcksers verschiedene Behandlungsmethoden und kellertechnische Maßnahmen, wie Adsorption an Bentoniten oder Aktivkohle, Belüftung, Filtration. Diese Verfahren haben jedoch den Nachteil, daß durch deren Anwendung die Weinqualität erheblich beeinträchtigt wird.

Es ist auch bekannt (SU-A-800 190), zur Beseitigung des Böcksers Kupfersulfat, das als Lebensmittelzuschlagsstoff zugelassen ist, einzusetzen. Der Kupferüberschuß muß anschließend mit Blauschönung (Ausfällen mit Kaliumhexacyanoferrat-II) entfernt werden. Eine derartige Behandlung ist umweltschädlich, sehr arbeitsintensiv und unzeitgemäß.

Es ist ferner bekannt (CH-A-648 993), Gärungsprodukte zur Beseitigung des Böcksers mit elektrolytisch abgeschiedenen Metallionen, vorzugsweise Ag-Ionen, zu versetzen, die mit den Geruchs- und Geschmacksfehlern erzeugenden Substanzen in der Flüssigkeit unlösliche Salze bilden. Diese als Katadyn-Verfahren bekannte Methode belastet den Wein mit schädlichen Ag-Ionen. Dieses Verfahren ist allenfalls für Alkoholdestillate geeignet.

Der Erfindung liegt die Aufgabe zugrunde, die vorgenannten Nachteile, die bei der Beseitigung des Böcksers auftreten, zu beseitigen und ein umweltfreundliches Verfahren anzugeben.

Diese Aufgabe wird erfindungsgemäß entsprechend den kennzeichnenden Merkmalen des Anspruchs 1 dadurch gelöst, daß den Fruchtsäften, Wein, Fruchtwein oder Fruchtdestillaten organische Cu-Verbindungen zugesetzt werden, die in Wasser sowie in unvergorenen und vergorenen Fruchtsäften, Wein, Fruchtwein oder Fruchtdestillaten schwerlöslich oder unlöslich sind und durch Reaktion mit den Schwefelverbindungen unlösliche Sulfide bilden, die durch Ausfällung aus der Flüssigkeit abgeschieden werden. Die sich bei der Einwirkung von organischen Kupferverbindungen mit den zu entfernenden Schwefelverbindungen bildenden unlöslichen Sulfide können leicht als unlösliche Feststoffe aus dem Wein, Fruchtwein, Fruchtdestillat oder den Fruchtsäften abgeschieden werden.

Als besonders geeignet für das erfindungsgemäße Verfahren haben sich schwerlösliche oder unlösliche Kupfersalze der Zitronensäure, Weinsäure, Apfelsäure, Stearinsäure oder Milchsäure erwiesen, die den Vorteil haben, daß sie lebensmittelfreundlich und in ökologischer Hinsicht unbedenklich sind.

Vorzugsweise werden Kupfersalze ein- oder mehrwertiger Carboxylsäuren, wie z. B. Kupferstearat, Kupfercitrat, Kupfermalat, Kupfertartrat, Kupferlactat eingesetzt, die sich mit den Schwefelverbindungen zu unlöslichem Kupfersulfid umsetzen.

Auch Mischungen der genannten Salze können mit gleichem Vorteil zum Einsatz gelangen.

Ein besonders guter Wirkungsgrad wird erreicht, wenn man die Kupferverbindungen in Kombination mit Adsorptionsmitteln oder Filterhilfsmitteln anwendet, wobei als Adsorptionsmittel Bentonite besonders geeignet sind. Diese besitzen hohe Quellfähigkeit und ein gutes Ionenaustauschvermögen und dienen der Anlagerung der Kupferverbindungen.

Dabei kann die zerriebene Bentonitmasse mit löslichen Kupfersalzen imprägniert und danach zur Bildung des unlöslichen Carboxylats mit Carboxylsäuren beaufschlagt werden.

Zur Durchführung des erfindungsgemäßen Verfahrens ist es von Vorteil, Granulate aus wässrigen Suspensionen von Bentonit mit Kupfercarboxylaten zu versetzen, die man z. B. durch Sprühtrocknen erhält.

Als Adsorptionsmittel ist auch Aktivkohle, gegebenenfalls in Kombination mit Bentonit, geeignet.

Nachfolgend sei die Erfindung an einem Beispiel beschrieben:
5 g reines Kupfercitrat wird mit 95 g Bentonit vermischt. Die granulierte Masse wird in 1000 1 mit Böckser verunreinigtem Wein eingebracht und ca. 2 Stunden gerührt. Nach dem Absetzen wurde der Wein abgehebert und filtriert. Der sensorische Test ergab eine einwandfreie Trinkqualität des vorher ungenießbaren Weines.

## Patentansprüche

1. Verfahren zur Beseitigung von Geruchs- und/oder Geschmacksfehlern in unvergorenen oder vergorenen Fruchtsäften aus Obst oder Trauben, insbesondere Wein, Fruchtwein oder Fruchtdestillaten, deren Ursache in der Bildung von Schwefelverbindungen, insbesondere Schwefelwasserstoff, liegt unter Zusatz von Cu-Verbindungen,
**dadurch gekennzeichnet,**
daß den Fruchtsäften, Wein, Fruchtwein oder Fruchtdestillaten organische Cu-Verbindungen zugesetzt werden, die in Wasser sowie unvergorenen oder vergorenen Fruchtsäften, Wein, Fruchtwein oder Fruchtdestillaten schwerlöslich oder unlöslich sind und durch Reaktion mit den Schwefelverbindungen unlösliche Sulfide bilden, die durch Ausfällung aus der Flüssigkeit abgeschieden werden.

2. Verfahren nach Anspruch 1, dadurch gekennzeichnet, daß schwerlösliche oder unlösliche Kupfersalze ein- oder mehrwertiger Carboxylsäuren eingesetzt werden.

3. Verfahren nach Anspruch 1 oder 2, dadurch gekennzeichnet, daß als Cu-Verbindungen Kupfersalze ein- oder mehrwertiger Carboxylsäuren, wie Kupferstearat, Kupfercitrat, Kupfermalat, Kupfertartrat, Kupferlactat, oder Mischungen dieser Salze, eingesetzt werden.

4. Verfahren nach einem der vorhergehenden Ansprüche, dadurch gekennzeichnet, daß die Cu-Verbindungen mit Absorbentien, insbesondere Bentonit, eingesetzt werden.

5. Verfahren nach Anspruch 4, dadurch gekennzeichnet, daß Bentonit als Granulat verwendet wird, welches mit Kupfersalzen vermischt und anschließend mit Carboxylsäuren beaufschlagt wird.

## Claims

1. A process for the elimination, through addition of Cu compounds, of undesirable odors and/or tastes from non-fermented or fermented fruit juices obtained from fruit or grapes, particularly wine, fruit wine, or fruit distillates, the cause of which lies in the formation of sulfur compounds, particularly hydrogen sulfide, characterized in that organic Cu compounds, which are hardly soluble or insoluble in water, as well as in non-fermented and fermented fruit juices, wine, fruit wine, or fruit distillates, are added to the fruit juices, wine,fruit wine, or fruit distillates, and which, by reacting with the sulfur compounds, form insoluble sulfides that are separated from the liquid by precipitation.

2. A process according to claim 1, characterized in that hardly soluble or insoluble copper salts of monovalent or multivalent carboxylic acids are used.

3. A process according to either claim 1 or claim 2, characterized in that monovalent or multivalent copper salts, such as copper stearate, copper citrate, copper malate, copper tartrate, copper lactate, or mixtures of these salts are used as Cu compounds.

4. A process according to any one of the preceding claims, characterized in that the Cu compounds are used together with absorption agents, particularly bentonite.

5. A process according to claim 4, characterized in that bentonite, which is used as a granulate, is mixed with copper salts and is then exposed to carboxylic acids.

## Revendications

1. Procédé pour l'élimination de défauts d'odeur et/ou de goût qui se produisent dans des jus de fruit, fermentés ou non, à base de fruit ou de raisin, en particulier dans du vin, du vin de fruit ou des distillats de fruit et dont la cause réside dans la formation de composés du soufre, en particulier de l'acide sulfurique, avec addition de composés du soufre, caractérisé en ce que l'on ajoute, aux jus de fruit, vin, vin de fruit ou distillats de fruit, des composés du cuivre qui sont difficilement solubles ou insolubles dans l'eau ainsi que dans les jus de fruit fermentés ou non, le vin, le vin de fruit ou les distillats de fruit et qui forment, par réaction avec des composés du soufre, des sulfites insolubles qui sont séparés du liquide par précipitation.

2. Procédé selon la revendication 1, caractérisé en ce que l'on utilise des sels de cuivre difficilement solubles ou insolubles d'acides carboxyliques monovalents ou à plusieurs valences.

3. Procédé selon la revendication 1 ou 2, caractérisé en ce que l'on utilise, en tant que composés du cuivre, des sels de cuivre d'acides carboxyliques monovalents ou à plusieurs valences, tels que le stéarate de cuivre, le citrate de cuivre, le malate de cuivre, le tartrate de cuivre, le lactate de cuivre ou des mélanges de ces sels.

4. Procédé selon l'une quelconque des revendications précédentes, caractérisé en ce que l'on utilise des composés du cuivre comportant des corps absorbants, en particulier de la bentonite.

5. Procédé selon la revendication 4, caractérisé en ce que l'on utilise la bentonite sous forme d'un granulat qui est mélangé avec des sels de cuivre et qui est ensuite soumis à l'action d'oxydes carboxyliques.
